# EUROPÄISCHE PATENTSCHRIFT

(11) **EP 0 709 759 B1**
(45) Veröffentlichungstag und Bekanntmachung des Hinweises auf die Patenterteilung: **22.12.1999**
(21) Anmeldenummer: 95115098.6
(22) Anmeldetag: 25.09.1995
(51) Int. Cl.: G06F 1/00

(54) **Verfahren und Anordnung zur Bestrahlungsüberwachung gesicherter elektronischer Bauteile**
Radiation monitoring method and device for secured electronic components
Méthode et dispositif de surveillance de rayonnement pour composants électroniques protégés

(30) Priorität: 30.09.1994 DE 4435080
(43) Veröffentlichungstag der Anmeldung: 01.05.1996
(73) Patentinhaber: Siemens Nixdorf Informationssysteme AG, 33106 Paderborn (DE)
(72) Erfinder: Depta, Robert, Dipl.-Phys., D-86179 Augsburg (DE)
(74) Vertreter: Epping, Wilhelm, Dr.-Ing.

(56) Entgegenhaltungen:
- EP-A- 0 125 349
- EP-A- 0 417 447
- US-A- 5 053 992

## Beschreibung

Die Erfindung betrifft ein Verfahren und eine Anordnung zur Bestrahlungsüberwachung gesicherter elektronischer Bauteile in Geräten mit geheimzuhaltenden Schaltungen und/oder Daten gemäß dem Oberbegriff der Ansprüche 1 bzw. 3.

In vielen Geräten, die beispielsweise im Bankwesen oder sonstigen sicherheitsrelevanten Bereichen Verwendung finden, können Daten, z.B. Chiffrierschlüssel, gespeichert oder Algorithmen, z.B. zum Verschlüsseln, durch Schaltungsteile realisiert sein, die geheim zu halten und daher zu schützen sind. Es ist bereits eine Reihe von Lösungen zum Schutz solcher Geräte bekannt, die sich auf die unterschiedlichsten Arten des Eindringens in diese Geräte beziehen , man siehe z.B. EP-0 417 447 -A2. Zu diesen bekannten Lösungen gehört auch die Überwachung auf das Eindringen von Strahlungen, insbesondere von Röntgenstrahlen, um die anderen mechanischen und elektrischen Schutzmaßnahmen zu umgehen.

Eine dieser bekannten Anordnungen verwendet als Strahlungssensor für sichtbare und ionisierende unsichtbare Strahlung einen Phototransistor oder Photodioden in Verbindung mit einem Operationsverstärker. Von Nachteil hierbei ist die sehr geringe Ansprechempfindlichkeit bei ionisierender Strahlung und der hohe Leistungsverbrauch.

Aufgabe der Erfindung ist es daher, durch ein neues Verfahren und eine entsprechend arbeitende Anordnung zur Bestrahlungs überwachung die Effektivität der Überwachung bei extrem geringem Leistungsverbrauch zu erhöhen.

Diese Aufgabe wird hinsichtlich des neuen Verfahrens durch die kennzeichnenden Merkmale des Anspruches 1 gelöst. Das Grundprinzip der Lösung besteht danach in der Verwendung einer bisher nur im Bereich der Röntgendiagnostik verwendeten Verstärkerfolie, wie sie z.B. von der Firma CAWO Phototechnische Fabrik GmbH in D-86521 Schrobenhausen hergestellt und vertrieben wird. Diese zur Verminderung der Strahlenbelastung entwickelten Verstärkerfolien reagieren auf Röntgenstrahlen sehr empfindlich und wandeln sie in eine sichtbare Strahlung um. Die Wellenlän e der Lichtstrahlung ist dabei abhängig von den für die Folie verwendeten Leuchtstoffen. Diese sichtbare Strahlung wird nun durch wenigstens ein im Strahlungsbereich der Folie angeordnetes und auf das Spektrum der Strahlung abgestimmtes Photoelement, z.B. Photodiode, zur Steuerung eines Auswerteschaltgliedes aufgefangen.

Mit einer solchen Verstärkerfolie können in einfacher Weise auch großflächige Bereiche überwacht werden. In diesem Falle ist es zweckmäßig, wenn im Strahlungsbereich der Verstärkerfolie verteilt mehrere Photoelemente angeordnet werden.

Andererseits können die vorgesehenen Photoelemente auch auf in den überwachten Bereich auf anderem Wege eindringende sichtbare Strahlung unmittelbar reagieren, z.B. beim Eingriff mit einer Sonde. Durch die gleichzeitige Verwendung von weiteren, auf unterschiedliche Wellenlängen ansprechende Photoelemente kann der Überwachungsbereich in einfacher Weise auch auf Infrarot- und/oder UV-Strahlung ausgedehnt werden.

Bei Verwendung von Verstärkerfolien mit ausreichend großer Nachleuchtzeit entsprechend Anspruch 2 ist es außerdem möglich, auch kurze Bestrahlungsimpulse zu erfassen und die Auswerteschaltglieder zum Ansprechen zu bringen.

Analoges gilt für die Anordnung gemäß der Erfindung, deren Aufbau durch die Merkmale des Anspruches 3 festgelegt ist, wobei Weiterbildungen, insbesondere hinsichtlich der Gestaltung des Steuerschaltkreises für das Auswerteschaltglied und dessen Art, sich aus den weiteren Ansprüchen 5 bis 9 ergeben. Durch einen einfachen Steuerzweig mit gesperrtem Schaltelement, wenn keine Strahlung in den gesicherten Bereich eindringt, ist der Leistungsverbrauch äußerst gering, so daß die Anordnung auch unabhängig von einer äußeren Stromversorgung über mehrere Jahre zuverlässig arbeiten kann.

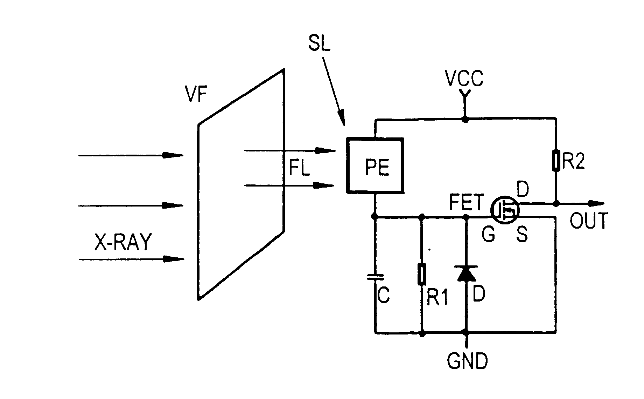

Einzelheiten der Erfindung seien nachfolgend anhand eines in der Zeichnung dargestellten Ausführungsbeispieles näher erläutert.

Die einzige Figur zeigt im linken Teil die auf ionisierende, nicht sichtbare Strahlung, z.B. Röntgenstrahlen X-RAY, reagierende Verstärkerfolie VF, die die in den überwachten Bereich eines Gerätes eindringende Strahlung X-RAY in eine sichtbare Lichtstrahlung FL umsetzt. Diese Lichtstrahlung wirkt dann auf ein Photoelement PE ein, das im Steuerzweig eines Auswerteschaltgliedes FET angeordnet ist.

Die Verstärkerfolie VF kann beispielsweise an der Innenwand des Gerätes gegenüber der Platine mit den zu sichernden Bauteilen oder auf einer dieser gegenüberliegenden anderen Platine angebracht sein, während das Photoelement PE auf der Platine mit den zu sichernden Bauteilen angeordnet ist. Dabei können bei großflächigen Bereichen auch mehrere Photoelemente PE gegenüber der Verstärkerfolie VF vorgesehen werden. Als Photoelemente PE werden zweckmäßig großflächige und schnell reagierende Elemente in Form von Photodioden oder Phototransistoren verwendet, deren Ansprechempfindlichkeit auf das Spektrum der von der Verstärkerfolie abgegebenen Lichtstrahlung abgestimmt ist.

Bei einer das Ansprechen des Auswerteschaltgliedes gewährleistenden Nachleuchtzeit der Verstärkerfolie VF können in einfacher Weise auch sehr kurze Bestrahlungsimpulse erfaßt werden.

Aber nicht nur eine von der Verstärkerfolie VF stammende Lichtstrahlung FL kann von den Photoelementen PE überwacht werden, sondern auch jede auf anderem Wege in den zu sichernden Bereich eindringende sichtbare Strahlung SL.

Das Auswerteschaltglied und der damit verbundene Steuerschaltkreis mit dem Photoelement PE ist dabei so gestaltet, daß der Leistungsverbrauch bei nicht vorliegender Strahlung gering ist, so daß die Anordnung auch bei Speisung durch eine Batterie über lange Zeit zuverlässig arbeitet.

Beim gewählten Ausführungsbeispiel ist als Auswerteschaltglied ein N-Kanal-Metalloxydsemiconductor-Feldeffekttransistor FET vorgesehen, dessen Steuereingang G mit dem Verbindungspunkt zwischen dem Photoelement PE und einem Widerstand R1 als Steuerzweig verbunden ist, wobei der freie Anschluß des Widerstandes R1 an einem Bezugspotential GND und das freie Ende des Photoelementes PE an einem Quellenpotential VCC liegt, das im vorliegenden Fall positiv gegenüber dem Bezugspotential GND ist. Von den die eigentliche Schaltstrecke bildenden beiden Schaltelektroden liegt die Source-Elektrode S ebenfalls am Bezugspotential GND, während die Drain-Elektrode D über einen Widerstand R2 mit dem Quellenpotential VCC verbunden ist, und den Steuerausgang OUT bildet.Dem Widerstand R1 im Steuerzweig ist außerdem eine Diode D zur Temperaturkompensation und ein Kondensator C zur Erzeugung definierter Zustände an der Steuerelektrode G parallel geschaltet.

Bei nicht leitendem Photoelement PE ist daher der Transistor FET gesperrt. Wird dagegen das Photoelement PE mit Lichtstrahlung FL oder SL beaufschlagt, wird der Transistor FET leitend, wobei die an der Drain-Elektrode D und damit am Steuerausgang OUT auftretende Potentialänderung als Ausgangssignal wirksam wird und in bekannter Weise damit verbundene Schaltmaßnahmen auslöst.

Anstelle eines Metalloxydsemiconductor-Feldeffekttransistors vom N-Kanal-Typ kann auch ein solcher vom P-Kanal-Typ verwendet werden. Als Quellenpotential VCC wäre dann ein gegenüber dem Bezugspotential GND negatives Potential vorzusehen.

Jedem Photoelement PE ist ein eigenes Auswerteschaltglied FET zugeordnet. Werden daher mehrere Photoelemente PE mit ihren Auswerteschaltgliedern FET zur Überwachung vorgesehen, dann sind die Steuerausgänge OUT aller Auswerteschaltglieder über ein ODER-Glied in bekannter Weise zusammenzuschalten.

## Patentansprüche

1. Verfahren zur Bestrahlungsüberwachung gesicherter elektronischer Bauteile in Geräten mit geheimzuhaltenden Schaltungen und/oder Daten mit einer auf sichtbare und unsichtbare Strahlung, z.B. Röntgenstrahlen, ansprechenden Überwachungsschaltung, die bei Bestrahlung anspricht und einen Alarm auslöst und/oder die Zerstörung sicherheitsrelevanter Schaltungsteile und/oder Speicherdaten bewirkt,
**gekennzeichnet**
durch die Verwendung einer, die nicht sichtbare Strahlung in eine sichtbare Strahlung umsetzenden Verstärkerfolie (VF) in Verbindung mit einem oder mehreren auf das Spektrum der von der Verstärkerfolie gelieferten Strahlung abgestimmten Photoelementen (PE), die mit ihnen gekoppelte Auswerteschaltglieder (FET) steuern.

2. Verfahren nach Anspruch 1,
**gekennzeichnet**
durch die Verwendung von Verstärkerfolien (VF) mit einer das Ansprechen der Auswerteschaltglieder (FET) auch bei kurzen Bestrahlungsimpulsen gewährleistenden Nachleuchtzeit.

3. Anordnung zur Bestrahlungsüberwachung gesicherter elektronischer Bauteile in Geräten mit geheimzuhaltenden Schaltungen und/oder Daten mit einer auf sichtbare und unsichtbare Strahlung, z.B. Röntgenstrahlen, ansprechenden Überwachungsschaltung, die bei Bestrahlung anspricht und einen Alarm auslöst und/oder die Zerstörung sicherheitsrelevanter Schaltungsteile und/oder Speicherdaten bewirkt,
**dadurch gekennzeichnet,**
daß im Bereich der zu sichernden elektronischen Bauteile eine, nicht sichtbare Strahlung in eine sichtbare Strahlung umsetzende Verstärkerfolie (VF) angeordnet ist und
daß im Strahlungsbereich der Verstärkerfolie (VF) wenigstens ein auf das Spektrum der von der Verstärkerfolie (VF) gelieferten Strahlung abgestimmtes Photoelement (PE) zur Steuerung eines Auswerteschaltgliedes (FET) angeordnet ist.

4. Anordnung nach Anspruch 3,
**dadurch gekennzeichnet,**
daß zusätzliche auf unterschiedliche Wellenlängen ansprechende Photoelemente (PE) zur Überwachung von Infrarot- und /oder UV-Strahlung vorgesehen sind.

5. Anordnung nach Anspruch 3 oder 4,
**dadurch gekennzeichnet,**
daß bei mehreren Photoelementen (PE) die Steuerausgänge (OUT) der zugehörigen Auswerteschaltglieder (FET) über ein ODER-Glied zusammengefaßt sind.

6. Anordnung nach einem der Ansprüche 3 bis 5,
**dadurch gekennzeichnet,**
daß jedes Photoelement (PE) in Reihe mit einem Widerstand (R1) einen Steuerzweig zwischen einem Bezugspotential (GND) und einem Quellenpotential (VCC) bildet und
daß der Verbindungspunkt zwischen dem Photoelement (PE) und dem Widerstand (R1) mit der Steuerelektrode (G) eines Schaltelementes (FET) als Auswerteschaltglied verbunden ist, dessen eine Schaltelektrode (S) mit dem Bezugspotential (GND) und dessen andere, als Steuerausgang (OUT) dienende Schaltelektrode (D) über einen Widerstand (R2) mit dem Quellenpotential (VCC) verbunden ist, so daß das Schaltelement (FET) nur bei Bestrahlung des Photoelementes (PE) leitend wird und am Steuerausgang (OUT) ein Alarmsignal wirksam wird.

7. Anordnung nach Anspruch 6,
**dadurch gekennzeichnet,**
daß dem Widerstand (R1) im Steuerzweig eine Diode (D) zur Temperaturkompensation parallelgeschaltet ist.

8. Anordnung nach Anspruch 6 oder 7,
**dadurch gekennzeichnet,** daß dem Widerstand (R1) im Steuerzweig ein Kondensator (C) parallelgeschaltet ist.

9. Anordnung nach einem der Ansprüche 6 bis 8,
**dadurch gekennzeichnet,**
daß die Schaltelemente (FET) aus einem N-Kanal-Feldeffekttransistor bzw. P-Kanal-Feldeffekttransistor bestehen und das Quellenpotential (VCC) positiv bzw. negativ gegenüber dem Bezugspotential (GND) ist.

## Claims

1. Method for the irradiation monitoring of secured electronic components in apparatuses having circuits and/or data which are to be kept secret, with a monitoring circuit which responds to visible and invisible radiation, e.g. X-rays, responds in the event of irradiation and triggers an alarm and/or effects the destruction of stored data and/or circuit sections relevant to security,
characterized
by the use of an intensifying screen (VF), which converts the invisible radiation into a visible radiation, in conjunction with one or more photoelements (PE), which are tuned to the spectrum of the radiation supplied by the intensifying screen and control evaluation switching elements (FET) coupled to them.

2. Method according to Claim 1,
characterized
by the use of intensifying- screens (VF) with a persistence which *ensures* that the evaluation switching elements (FET) respond even in the event of *short* irradiation pulses.

3. Arrangement for the irradiation monitoring of secured electronic components in apparatuses having circuits and/or data which are to be kept secret, with a monitoring circuit which responds to visible and invisible radiation, e.g. X-rays, responds in the event of irradiation and triggers an alarm and/or effects the destruction of stored data and/or circuit sections relevant to security,
characterized
in that an intensifying screen (VF), which converts invisible radiation into a visible radiation, is arranged in the region of the electronic components to be secured, and
in that at least one photoelement (PE) for controlling an evaluation switching element (FET) is arranged in the radiation region of the intensifying screen (VF), the said photoelement being tuned to the spectrum of the radiation supplied by the intensifying screen (VF).

4. Arrangement according to Claim 3,
characterized
in that additional photoelements (PE) responding to different wavelengths are provided for the purpose of monitoring infrared and/or UV radiation.

5. Arrangement according to Claim 3 or 4,
characterized
in that, in the case of a plurality of photoelements (PE), the control outputs (OUT) of the associated evaluation switching elements (FET) are combined via an OR element.

6. Arrangement according to one of Claims 3 to 5,
characterized
in that each photoelement (PE) forms, in series with a resistor (R1), a control path between a reference-earth potential (GND) and a source potential (VCC), and
in that the junction point between the photoelement (PE) and the resistor (R1) is connected to the control electrode (G) of a switching element (FET) as evaluation switching element, one switching electrode (S) of which is connected to the reference-earth potential (GND) and the other switching electrode (D) of which, the latter electrode serving as control output (OUT), is connected to the source potential (VCC) via a resistor (R2), with the result that the switching element (FET) is turned on only in the event of irradiation of the photoelement (PE), and an alarm signal becomes active at the control output (OUT).

7. Arrangement according to Claim 6,
characterized
in that a diode (D) is connected in parallel with the resistor (R1) in the control path, for the purpose of temperature compensation.

8. Arrangement according to Claim 6 or 7,
characterized in that a capacitor (C) is connected in parallel with the resistor (R1) in the control path.

9. Arrangement according to one of Claims 6 to 8,
characterized
in that the switching elements (FET) comprise an N-channel field-effect transistor and/or P-channel field-effect transistor and the source potential (VCC) is respectively positive and/or negative relative to the reference-earth potential (GND).

## Revendications

1. Procédé pour la surveillance de l'irradiation de composants électroniques protégés contenus dans des appareils comprenant des circuits et/ou données à maintenir secrets, comprenant un montage de surveillance sensible à un rayonnement visible ou invisible, par exemple à des rayons X, et qui, sous une irradiation, répond et déclenche une alarme et/ou provoque la destruction des. parties de circuits et/ou données mémorisées qui sont critiques pour la sécurité, caractérisé par l'utilisation d'une pellicule amplificatrice (VF) qui convertit un rayonnement invisible en un rayonnement visible, en combinaison avec un ou plusieurs photo-élément(s) (PE) adapté(s) au spectre du rayonnement foumi par la pellicule amplificatrice, qui commande(nt) des éléments de circuit d'exploitation (FET) qui y sont connectés.

2. Procédé selon la revendication 1, caractérisé par l'utilisation de pellicules amplificatrices (VF) possédant un temps de luminescence rémanente qui garantit la réponse des éléments de circuit d'exploitation (FET), même en présence de courtes impulsions d'irradiation.

3. Dispositif pour la surveillance de l'irradiation de composants électroniques protégés contenus dans des appareils comprenant des circuits et/ou données à maintenir secrets, comprenant un montage de surveillance sensible à un rayonnement visible ou invisible, par exemple à des rayons X, et qui, sous une irradiation, répond et déclenche une alarme et/ou provoque la destruction des parties de circuits et/ou données mémorisées qui sont critiques pour la sécurité, caractérisé en ce que dans la région des composants électroniques à protéger, est déposée une pellicule amplificatrice (VF) qui convertit un rayonnement invisible en un rayonnement visible et en ce que, dans la région de rayonnement de la pellicule amplificatrice (VF), est disposé au moins un photo-élément (PE) raccordé sur le spectre du rayonnement fourni par la pellicule amplificatrice (VF) et destiné à la commande d'un élément de circuit d'exploitation (FET).

4. Dispositif selon la revendication 3, caractérisé en ce qu'il est prévu des photo-éléments (PE) additionnels, qui répondent à différentes longueurs d'onde pour la surveillance d'un rayonnement infrarouge et/ou ultraviolet.

5. Dispositif selon la revendication 3 ou 4, caractérisé en ce que, dans le cas de plusieurs photo-éléments (PE), les sorties de commande (OUT) des éléments de circuit d'exploitation (FET) correspondants sont réunies à travers un élément OU.

6. Dispositif selon une des revendications 3 à 5, caractérisé en ce que chaque photo-élément (PE) forme, en série avec une résistance (R1), une branche de commande entre un potentiel de référence (GND) et un potentiel de source (VCC) et
en ce que le point de jonction entre le photo-élément (PE) et la résistance (R1) est connecté à l'électrode de commande (G) d'un élément de commutation (FET) constituant l'élément de circuit d'exploitation, dont une électrode de circuit (S) est connectée au potentiel de référence (GND) et dont l'autre électrode de circuit (D), qui sert de sortie de commande (OUT), est connectée au potentiel de source (VCC) à travers une résistance (R2), de sorte que l'élément de circuit (FET) ne devient conducteur que dans le cas de l'irradiation du photo-élément (PE), et qu'un signal d'alarme entre alors en action à la sortie de commande (OUT).

7. Dispositif selon la revendication 6, caractérisé en ce qu'une diode (D) destinée à la compensation de la température est connectée en parallèle avec la résistance (R1) dans la branche de commande.

8. Dispositif selon la revendication 6 ou 7, caractérisé en ce qu'un condensateur (C) est connecté en parallèle avec la résistance (R1) dans la branche de commande.

9. Dispositif selon l'une des revendications 6 à 8, caractérisé en ce que les éléments de circuit (FET) sont constitués par un transistor à effet de champ à canal N respectivement par un transistor à effet de champ à canal P et le potentiel de source (VCC) est positif resp. négatif par rapport au potentiel de référence (GND).
